# EUROPÄISCHE PATENTSCHRIFT

(11) **EP 2 071 932 B1**
(45) Veröffentlichungstag und Bekanntmachung des Hinweises auf die Patenterteilung: **09.02.2011**
(21) Anmeldenummer: 08707720.2
(22) Anmeldetag: 14.02.2008
(51) Int. Cl.: H04W 64/00

(54) **VERFAHREN UND VORRICHTUNG ZUR VERWALTUNG VON REFERENZUMGEBUNGSINFORMATIONEN**
METHOD AND APPARATUS FOR MANAGING REFERENCE ENVIRONMENT INFORMATION
PROCEDE ET DISPOSITIF POUR GERER DES INFORMATIONS DE REFERENCE D'ENVIRONNEMENT

(30) Priorität: 16.03.2007 DE 102007012782; 19.06.2007 DE 102007028114
(43) Veröffentlichungstag der Anmeldung: 24.06.2009
(73) Patentinhaber: Fraunhofer-Gesellschaft zur Förderung der angewandten Forschung e.V., 80686 München (DE)
(72) Erfinder: MEYER, Steffen, 91052 Erlangen (DE); HUPP, Jürgen, 90425 Nürnberg (DE); VAUPEL, Thorsten, 34576 Hornberg (DE); LOIDL, Karin, 89250 Senden (DE)
(74) Vertreter: Stöckeler, Ferdinand
(86) Internationale Anmeldenummer: PCT/EP2008/001133
(87) Internationale Veröffentlichungsnummer: WO 2008/113439

(56) Entgegenhaltungen:
- WO-A-2007/101107
- US-A1- 2004 203 885
- US-A1- 2006 240 840

## Beschreibung

Die vorliegende Erfindung befasst sich mit einer Vorrichtung und einem Verfahren zur Lokalisierung von Endgeräten und insbesondere damit, wie schnurlos kommunizierende Endgeräte zuverlässig und mit hoher Präzision lokalisiert werden können, wobei eine fortlaufende Aktualisierung von Modellen sich ändernder Umgebungsbedingungen gewährleistet wird.

In wenigen Jahren wird die (Selbst-) Lokalisierung von mobilen Geräten beziehungsweise Endgeräten eine der wichtigsten Grundlagen für moderne, benutzerfreundliche Anwendungen sein. Mit der stetig zunehmenden Verbreitung von handlichen, mobilen Geräten (z. B. PDAs, Smartphones) in Verbindung mit der flächendeckenden Verfügbarkeit von digitalen oder analogen Übertragungstechnologien (z. B. WLAN, UMTS, GSM) wächst der Markt für Anwendungen, die den Nutzer in jeder Situation mit standortrelevanten Informationen versorgen. Heutige Anwendungen setzen dabei hauptsächlich auf das Satellitennavigationssystem NAVSTAR-GPS. Dieses kann jedoch im innerstädtischen Bereich mit hohen Bauwerken, Tunneln und Brücken sowie in Gebäuden (z. B. Flughäfen, Bahnhöfen, Messezentren) oft keine oder nur eine sehr ungenaue Position liefern, da die Satellitensignale zu stark abgeschwächt oder beeinflusst werden. Speziell diese Orte zeichnen sich aber durch eine hohe Besucherfrequenz aus. Eine alternative, kostengünstige und zuverlässige Ortungstechnologie ist deshalb notwendig, die diesem Szenario Rechnung trägt.

Für die drahtlose Netzwerkanbindung tragbarer Geräte hat sich der WLAN-Standard nach IEEE 802.11 (a, b, g) etablieren können. Dieser wird kontinuierlich weiterentwickelt, sowohl hinsichtlich der Datenrate als auch der Reichweite. Die etablierten Standards ebenso wie der in der Entwurfs-phase befindliche 802.11n-Standard ermöglichen eine breitbandige Datenübertragung mit hohen Datenraten und zeichnen sich durch einen hohen Integrationsgrad aus, welcher kostengünstige Hardware ermöglicht. In aktuellen PDAs und Smartphones sind schnurlose Schnittstellen, wie das erwähnte WLAN, meist integriert. Darüber hinaus wird oft Bluetooth, und in Zukunft eventuell auch WIMAX eingesetzt werden.

Im Fall von WLAN stehen inzwischen an vielen Orten mit hoher Besucherfrequenz kommerzielle, öffentliche WLAN-Zugangspunkte (Hotspots) zur Verfügung. Darüber hinaus hat die stark steigende Verbreitung von Breitbandinternetanschlüssen (zum Beispiel über DSL) auch im privaten Bereich die Verbreitung von WLAN als günstige Heimvernetzungstechnologie gefördert. Mehrere Studien haben ergeben, dass der innerstädtische Bereich an vielen Orten heute bereits nahezu flächendeckend mit WLAN versorgt oder gar überabgedeckt ist. Insbesondere Orte des täglichen Lebens und von touristischem Interesse sind diesbezüglich gut ausgestattet.

Momentan bietet es sich daher an, WLAN als Basistechnologie für eine Ortung zu verwenden. In Zukunft werden sicherlich auch andere Technologien zum Einsatz kommen, auf die sich das im Folgenden geschilderte erfinderische Konzept ebenfalls anwenden lässt. Die Ortung in WLAN-Netzen kann prinzipiell durch Auswertung der empfangenen Basisstationen (Hotspots bzw. Access Points) erfolgen, wobei beispielsweise deren jeweilige auf dem Endgerät empfangene Signalstärke ausgewertete wird. WLAN-Signale werden jedoch durch Bauwerke und andere Hindernisse stark abgeschirmt, wobei insbesondere in Gebieten mit umfassender WLAN-Versorgung üblicherweise keine idealen Freifeldbedingungen vorherrschen, da sich diese im Stadtgebiet befinden. Somit kann nicht direkt von der gemessenen Signalstärke bzw. Feldstärke auf die Entfernung zu einer Basisstation oder einem anderen Kommunikationspartner geschlossen werden. Eine öffentliche Umgebung oder ein dynamisch veränderliches Umfeld (beispielsweise eine Lagerhalle), unterliegt prinzipiell nicht beeinflussbaren Änderungen (Aufbau/Abbau/Tausch von Access Points, nur zeitlich begrenzte Aktivität der Zugangspunkte usw.).

Eine Möglichkeit, die komplexen Umgebungsbedingungen zu beherrschen, die sich in Nicht-Freifeld-Anwendungen ergeben, ist, die tatsächliche Signalausbreitung durch Testmessungen an geographisch bekannten Referenzpunkten bzw. Referenzpositionen zu bestimmen. Eine Ortung auf dem Endgerät kann dann dadurch erfolgen, dass aktuell aufgenommene Messwerte mit hinterlegten Messwerten der Referenzpunkt-Datensätze abgeglichen werden. Aus der besten Übereinstimmung bzw. den am besten passenden Referenzpunkten wird dann eine Position abgeschätzt, ohne dass eine Kenntnis über den eigentlichen Standort der Basisstationen bzw. der Access Points benötigt wird.

In einer städtischen, durch ständige Umgebungsänderungen geprägten Umwelt, ergibt sich durch den Einsatz eines solchen eingelernten Verfahrens (auch als Referenzpunkt-oder Fingerprinting-Verfahren bezeichnet) das folgende Problem. Die Datenbasis mit Referenzwerten bzw. die Referenzdaten werden anfangs erfasst und müssen später kontinuierlich oder wiederkehrend aktualisiert werden. Andernfalls sinkt die Aussagekraft der Referenzdaten - sie "altern" - und die Ortungsqualität wird leiden, da sich die Empfangsbedingungen, bzw. die Umgebungsbedingungen (aufnehmbare Umgebungsinformationen) mit der Zeit ändern.

Während das Fingerprinting-Verfahren an sich funktioniert, ist das zentrale Problem die Aktualisierung der Referenzdaten. Teilweise wurden, um den Aufwand für den Aufbau und die Pflege der Datenbasis bzw. der Referenzdaten in Grenzen zu halten, Verfahren vorgeschlagen, bei dem alle Nutzer Lücken und Fehler in der Datenbasis durch "Nachlernen" beheben können. Problematisch an diesem Ansatz ist der Austausch und die Vertrauenswürdigkeit solchermaßen erhobener Daten. Um das System funktionsfähig zu erhalten, muss in jedem Fall verhindert werden, dass irrtümliche Fehlmessungen (z. B. wenn ein Nutzer beim Nachlernen eine falsche Ist-Position angibt) sowie bewusste Sabotageversuche die gemeinsame Datenbasis unbrauchbar machen. Bestehende Ansätze zur WLAN-Ortung, die für den Einsatz in offenen Umgebungen konzipiert sind (wie z. B. Place Lab oder Skyhook-Wireless) benutzen Triangulation statt Fingerprinting als Basisverfahren, mit den oben beschriebenen Nachteilen. Daher benötigen diese Verfahren eine Datenbasis, in der eine Zuordnung von einer Standortinformation der Basisstation zu dessen Basisstationserkennung erfolgt (beispielsweise anhand der MAC-Adresse der Basisstation bzw. des Access Points). Aus aktuellen Messwerten werden Entfernungen zu mehreren Basisstationen geschätzt und daraus eine Position berechnet. Bei diesen Systemen ist also ebenfalls der Aufbau einer gesicherten, zuverlässigen Datenbasis erforderlich.

Das Problem der Vertrauenswürdigkeit eingelernter Informationen sowie eine Modellierung der dynamischen Änderungen des Umfeldes sind bislang nur unzureichend gelöst. Place Lab konvertiert und importiert bestehende Datenbanken mit Basisstationsstandorten z. B. von Hotspot-Betreibern oder aus der War-Driving-Community. Als War-Driving wird das gezielte Abfahren von Straßenzügen mit dem Ziel, WLAN-Stationen aufzuspüren und mit Ortsbezug zu versehen, bezeichnet. War-Driver nutzen dazu ein WLAN-fähiges Laptop, dass zusätzlich mit einem GPS-Empfänger ausgestattet ist. Das Problem dabei ist, dass eine Aktualität dieser Daten insbesondere im Bezug auf private Stationen nicht garantiert ist. Gleichsam sind Präzision und Vertrauenswürdigkeit dieser Methodik anzuzweifeln.

Skyhook Wireless versucht das Problem durch die Mitarbeit von sog. "Scannern" zu lösen. Dies sind speziell ausgewählte, vertrauenswürdige Nutzer, welche die Datenbasis durch gezieltes War-Driving pflegen. Dadurch ist das Aktuellhalten der Datenbasis mit hohem Aufwand verbunden, eine schnelle Anpassung bei Änderungen von Access Points ist nicht möglich. Skyhook Wireless bietet seinen Kunden derzeit ein jährliches Update der Datenbasis an. Damit die Datenbasis trotzdem nicht zu schnell altert, werden Access Points, die nicht zu öffentlichen Hotspots großer Anbieter gehören (welche damit potentiell kontinuierlich in Betrieb und an einem Standort fest installiert sind) vom System ausgeschlossen. Damit sinkt jedoch die Flächendeckung deutlich, da aktuell bereits ein Großteil der installierten WLAN-Basisstationen privater, nicht-öffentlicher Natur sind (SOHO, Industrie etc.) und sich damit der Kontrolle und Informationsversorgung weitestgehend entziehen.

Weitere Ortungslösungen, die allen Nutzern ein Pflegen der Datenbasis erlauben, verlassen sich auf den Gemeinschaftssinn der Nutzer und berücksichtigen ein mögliches bewusstes Verfälschen der Datenbasis nicht.

Die oben beschriebenen, teilweise bereits eingesetzten, Verfahren können die Datenbasis also nur in großen zeitlichen Abständen aktualisieren. Daher bieten diese keinen sinnvollen Umgang bzw. kein sinnvolles Konzept zum Umgang mit nur zeitweise aktiven Stationen.

Dieses Problem ist gerade für private Stationen, die einen stark wachsenden Teil der Stationen darstellen, besonders relevant, da solche privaten Stationen aufgrund von Bedenken bezüglich der Gefahr eines Einbruchs in das WLAN-Netz oder wegen der Strahlenbelastung häufig nur bei Bedarf betrieben werden. Die bis dato implementierten Lösungen erlauben also insbesondere nicht, im interessanten städtischen Bereich, in dem zum Einen die Empfangsbedingungen für eine Triangulation zu schwierig sind und zum Anderen die zur Verfügung stehenden Basisstationen bzw. Kommunikationspartner häufig wechseln, eine Lokalisierung von Endgeräten ohne den Einsatz externer Positionssysteme zuverlässig durchzuführen.

Die US 2006/240840 A1 befasst sich mit Verfahren und Vorrichtungen zum kontinuierlichen Optimieren von Daten in einer Referenzdatenbank, auf deren Grundlage Positionen von Endgeräten ermittelt werden. Die Referenzdatenbank sammelt Zugriffspunktinformationen von den Endgeräten, wobei ein Vertrauenspegel neuer Zugriffspunktinformationen höher ist, wenn mehrere Endgeräte diese Zugriffspunktinformationen liefern.

Es ist die Aufgabe der vorliegenden Erfindung, ein Konzept zum verbesserten Lokalisieren von Endgeräten bzw. zum verbesserten Verhalten von Referenzdaten bzw. Referenzumgebungsinformationen zu schaffen.

Diese Aufgabe wird durch ein Verfahren nach Anspruch 1, ein Computerprogramm nach Anspruch 9 und eine Referenzdatenverwaltungseinrichtung nach Anspruch 10 gelöst.

Die Erfindung kann in einem System Verwendung finden, in dem von einem Endgerät Informationen über die Umgebung, in der sich das Endgerät befindet, bestimmt wird. Mittels Referenzumgebungsinformationen, die dem Endgerät zur Verfügung gestellt werden, kann von dem Endgerät selbst dessen Position bestimmt werden. Zusätzlich wird eine Abweichung der beobachteten Umgebungsinformationen von den Referenzumgebungsinformationen (denen ein Modell der Umgebung des Endgeräts zugrunde liegt, die also auf einem Referenzdatenmodell basieren) bestimmt. Wird eine Abweichung der Referenzumgebungsinformationen von den bestimmten Umgebungsinformationen festgestellt, kann eine Aktualisierungsmaßnahme ergriffen werden, die beispielsweise das Aktualisieren der Datenbasis, also der Referenzdaten bzw. des Referenzdatenmodell umfasst.

Bei einer Implementierung des Konzepts zum Lokalisieren von Endgeräten kann somit eine Datenbasis dynamisch aktualisiert werden, so dass die Anwendung des Konzeptes den Vorteil haben kann, selbst unter zeitlich stark variablen Umgebungsbedinungen eine sichere Lokalisierung des Endgerätes zu gewährleisten.

Das erfindungsgemäße Konzept kann auf schnurlosen Endgeräten zur Verwendung gebracht werden, die beispielsweise mittels WLAN, GSM, Bluetooth oder WIMAX mit anderen Kommunikationspartnern kommunizieren können. Die Anwendung des erfindungsgemäßen Konzepts auf solchen Geräten kann den Vorteil haben, dass eine sichere und hochgenaue Lokalisierung auch in Umgebungen ermöglicht wird, die einer raschen Änderung der Umgebungsbedingungen, also der Empfangsbedingungen für die zugrunde liegende Schnurlostechnologie unterworfen sind.

Dabei wird erfindungsgemäß eine Auswertung eines Vertrauenswerts des die Aktualisierungsinformationen sendenden Endgeräts bei der Bewertung der Zuverlässigkeit der Aktualisierungsinformationen verwendet. Bei einem weiteren Ausführungsbeispiel werden die Referenzdaten lediglich dann aktualisiert, wenn ein Vertrauenskriterium erfüllt wird, wenn also eine von einem Endgerät bestimmte Abweichung plausibel ist. Die Forderung der zusätzlichen Erfüllung des Vertrauenskriteriums kann bewirken, dass durch die rasche Änderung der Umgebungsbedingungen induzierte, vom Endgerät verändert wahrgenommene Umgebungsbedingungen nur dann ihren Eingang in die Referenzdaten finden, wenn die bestimmte Änderung tatsächlich plausibel ist. Dieses kann den Vorteil bewirken, dass die Referenzdaten zuverlässiger aktualisiert werden, was durch die Unterdrückung fehlerhafter Aktualisierungen zu einer höheren Genauigkeit der Positionsbestimmungen führen kann.

Das Vertrauenskriterium kann dabei auf unterschiedlichste Weise erfüllt werden. Als Kriterium ist beispielsweise denkbar, dass mehrere unabhängige Endgeräte eine ähnliche Beobachtung gemacht haben. Alternativ kann eine Reproduzierbarkeit der Beobachtung das Kriterium sein, indem das Vertrauenskriterium als erfüllt gilt, wenn ein Endgerät eine ähnliche Beobachtung mehrfach gemacht hat. Erfindungsgemäß kann ein Reputationssystem zum Einsatz kommen, bei dem sich die Reputation eines Endgeräts bzw. Benutzers aus den in der Vergangenheit gemachten Beobachtungen ergibt. Eine Bewertung der Reputation kann durch die Nutzer vorgenommen werden, wobei eine Rückmeldung, dass die Ortungsgenauigkeit durch das Einbeziehen der Beobachtung des zu beurteilenden Benutzers abgenommen hat, zu einer Verschlechterung der Reputation führt. Das Referenzkriterium kann dann beispielsweise bei Überschreiten eines vorbestimmten Referenzwertes als erfüllt gelten. Darüber hinaus sind sämtliche Modelle, die eine Zuverlässigkeit der Beobachtungen eines Endgeräts bzw. Teilnehmers beurteilen können geeignet, ein auf diesen basierendes Vertrauenskriterium abzuleiten.

Gemäß einem Ausführungsbeispiel der Erfindung wird das erfindungsgemäße Konzept im Peer-to-Peer-Modus angewendet, in dem unterschiedliche Endgeräte miteinander ohne die Notwendigkeit einer zentralen Verwaltungsinstanz kommunizieren. Dies kann den Vorteil bewirken, dass die Implementierung kostengünstig ist, da auf eine zentrale Verwaltungsinstanz verzichtet werden kann. Auch kann vorteilhaft sein, dass die Aktualisierung der Referenzdaten in der Umgebung äußerst schnell erfolgt, da keine weite Übertragungsstrecke zu einem möglicherweise entfernt angebrachten zentralisierten Server in Kauf genommen werden muss. Dadurch kann auch als weiterer Vorteil ein verringertes Datenaufkommens hervorgerufen werden, wenn im Peer-to-Peer-Betrieb lediglich diejenigen benachbarten weiteren Endgeräte über die Abweichung informiert werden, für die diese Information Relevanz besitzt.

Gemäß einem weiteren Ausführungsbeispiel wird das Konzept mit einem zentralen Server, bzw. einer oder mehrerer zentraler Referenzdatenverwaltungseinrichtungen betrieben, die die Referenzdaten verwalten und gegebenenfalls, basierend auf von Endgeräten übermittelten Aktualisierungsmeldungen, aktualisieren. Gemäß einem Ausführungsbeispiel die Referenzdatenverwaltungseinrichtung mehrere Aktualisierungsmeldungen von unterschiedlichen Endgeräten empfangen kann, so dass eine Zuverlässigkeit der Aktualisierungsinformationen bewertet werden kann, bevor die Referenzdaten aktualisiert werden. Ein Vorteil eines Ausführungsbeispiels kann daher eine erhöhte Zuverlässigkeit der Referenzdaten sein.

Gemäß einem Ausführungsbeispiel können die Referenzdaten gemessene oder berechnete Umgebungsinformationen für vorbestimmte Referenzpositionen umfassen. Die Referenzumgebungsinformationen für Positionen, die den Referenzpositionen nicht entsprechen, können mittels eines geeigneten Referenzdaten- bzw. Umgebungsmodells aus den bestimmten bzw. gemessenen Umgebungsinformationen an den Referenzpositionen gewonnen werden. Das Ausführungsbeispiel kann daher den Vorteil mit sich bringen, dass die Datenmenge, die zur Bestimmung der Position einem Endgerät bzw. einer Referenzdatenverwaltungseinrichtung bekannt oder in dieser gespeichert sein muss, erheblich geringer sein kann, als die mögliche Anzahl zu bestimmender Positionen des Endgeräts.

Bevorzugte Ausführungsbeispiele der Erfindung werden nachfolgend, Bezug nehmend auf die beiliegenden Figuren, näher erläutert. Es zeigen:
- Fig. 1: ein Ausführungsbeispiel einer dem Stand der Technik entsprechenden Vorrichtung zum Lokalisie- ren von Endgeräten;
- Fig. 2: ein Beispiel einer Anwendung des Verfahrens zur Lokalisierung von Endgeräten;
- Fig. 3: ein Ausführungsbeispiel einer erfindungsgemäßen Vorrichtung zum Lokalisieren von Endgeräten;
- Fig. 4: ein Ausführungsbeispiel eines erfindungsgemäßen Systems zum Lokalisieren von Endgeräten;
- Fig. 5: ein Blockdiagramm eines erfindungsgemäßen Verfah- rens zum Lokalisieren von Endgeräten;
- Fig. 6: ein Ausführungsbeispiel einer erfindungsgemäßen Referenzdatenverwaltungseinrichtung;
- Fig. 7: ein weiteres Ausführungsbeispiel einer erfin- dungsgemäßen Referenzdatenverwaltungseinrichtung; und
- Fig. 8: eine schematische Darstellung eines erfindungsge- mäßen Verfahrens zum verwalten von Referenzumge- bungsinformationen einer Umgebung eines Endge- räts.

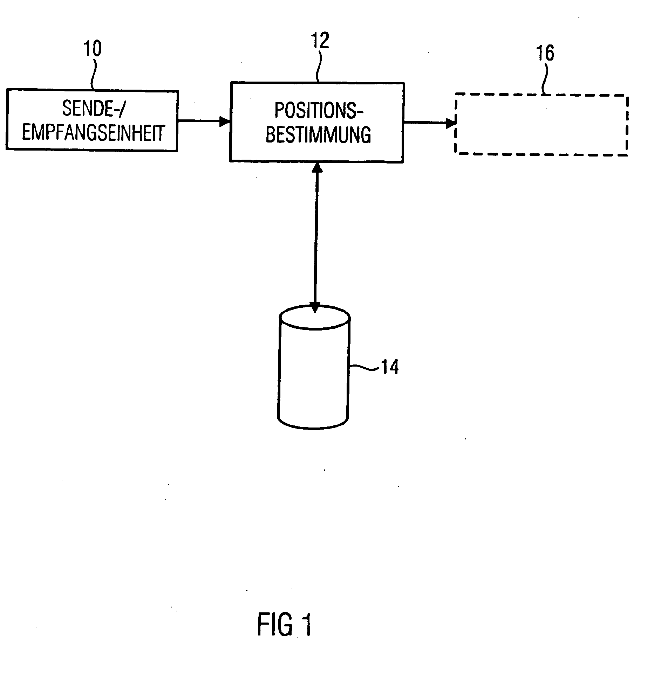

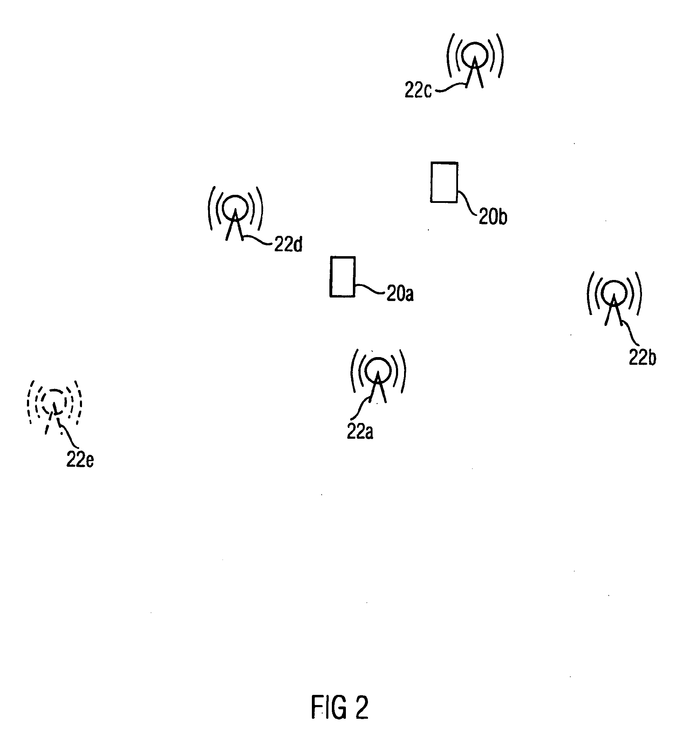

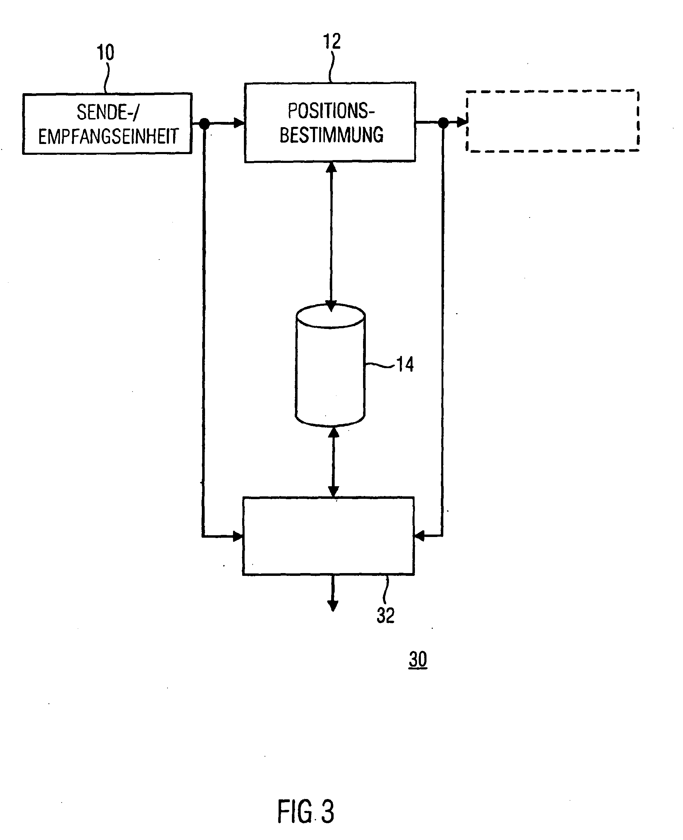

Anhand der Fig. 1 und 2 wird im Folgenden kurz eine Ortung gemäß dem Fingerprinting-Verfahren beschrieben, um das erfindungsgemäße Konzept, das anhand der Fig. 3 - 8 näher erläutert wird, zu motivieren.

Dabei wird insbesondere der Tatsache Rechnung getragen, dass die wachsende Verbreitung von nicht-öffentlichen WLAN-Stationen in vielen Städten inzwischen zu einer deutlichen Überabdeckung führt. Oftmals sind an einem einzigen Punkt acht bis zwölf Stationen (Access Points) empfangbar, wobei im innerstädtischen Bereich eine Anzahl empfangbarer Stationen von 30 sogar überschritten werden kann (Spitzenwerte auf belebten Plätzen oder Gebieten hoher Wohn- oder Bevölkerungsdichte).

Für eine sichere und genaue Ortung reichen in der Regel bereits drei bis vier Stationen aus.

Fig. 1 illustriert, wie die Ortung eines mobilen Endgerätes mittels Fingerprinting (WLAN, GSM, Bluetooth, WIMAX usw.) im öffentlichen Bereich als Selbstlokalisierung jedes einzelnen mobilen Endgerätes realisierbar ist. Dabei ist eine Datenübertragung nicht notwendig, so dass prinzipiell auf eine Konnektivität des mobilen Endgeräts mit anderen Kommunikationspartnern verzichtet werden kann. Dies ist möglich, da das mobile Endgerät seine eigene Position berechnet, in dem es aktuelle Signalcharakteristika (empfangene Umgebungsinformationen) seiner Umgebung misst und mit einer lokalen Referenzdatenbasis (also mit Referenzumgebungsinformationen) abgleicht.

Fig. 1 zeigt zur Illustration des Verfahrens beispielhaft eine schematische Darstellung eines mobilen Endgeräts, welches der Selbstlokalisierung fähig ist. Von einer Empfangseinrichtung 10 werden Umgebungsinformationen, wie beispielsweise die Anzahl in Reichweite befindlicher Access Points und deren jeweilige Empfangsfeldstärke, bestimmt. Diese Umgebungsinformationen werden an eine Positionsbestimmungseinheit 12 übertragen, welche ferner Zugriff auf Referenzumgebungsinformationen hat, die in einer Referenzdatenverwaltungseinrichtung 14 gespeichert sein können.

Dabei kann die Referenzdatenverwaltungseinrichtung 14 sowohl lokal innerhalb des mobilen Endgeräts als auch nicht lokal auf einem externen Speicherplatz oder Gerät gespeichert sein. Im letzteren Fall muss das mobile Endgerät selbstverständlich Zugang auf die Referenzdaten haben, wofür zumindest eine Kommunikationsverbindung mit der Referenzdatenverwaltungseinrichtung 14 bestehen muss. Die Positionsbestimmungseinrichtung 12 verwendet einen Ortungsalgorithmus, um, basierend auf den Umgebungsinformationen, die Position des Endgeräts zu bestimmen. Ist die Position bestimmt, kann diese optional an ein Anwendungsmodul 16 übermittelt werden, um beispielsweise bei einem digitalen Stadtplan die Position anzuzeigen, bzw. um Services anzubieten, die in direkter Kausalbeziehung zur bestimmten Position stehen (so genannte Location Based Services).

Fig. 2 zeigt beispielhaft ein Anwendungszenario mit zwei mobilen Endgeräten 20a und 20b und einer Mehrzahl von Kommunikationspartnern bzw. Basisstationen 22a - 22e, die sich in einer Umgebung der mobilen Endgeräte 20a und 20b befinden. Als Umgebungsinformationen können die mobilen Endgeräte 20a und 20b beispielsweise die eindeutigen Identifikationsnummern der Basisstationen und die den jeweiligen Basisstationen zugeordnete Empfangsfeldstärke bestimmen. Basisstation 22e befindet sich in der größten Entfernung zu den mobilen Endgeräten 20a und 20b, so dass diese zu manchen Zeitpunkten von den mobilen Endgeräten 20a und 20b empfangen werden kann und zu anderen Zeitpunkten nicht, was auch durch eine Abschaltung der Basisstation 22e hervorgerufen werden kann. Im städtischen Bereich kann auch eine Abschattung durch Passanten oder Pkws erfolgen. Zusätzlich kann auch eine Änderung der Luftbeschaffenheit, insbesondere der Luftfeuchtigkeit, dazu führen, dass an manchen Tagen Basisstation 22e empfangen wird und an anderen nicht.

Die mobilen Endgeräte 20a und 20b werden also im Allgemeinen zeitlich variierende Umgebungsinformationen empfangen, selbst wenn sich diese selbst nicht bewegen.

Werden die Referenzdaten in den Fig. 1 und 2 beschriebenen Anwendungsfällen nicht aktualisiert, kann dies also zu einer starken Beeinträchtigung der Ortungsgenauigkeit der mobilen Endgeräte führen.

Das in Fig. 3 gezeigte Ausführungsbeispiel macht sich die Tatsache zu Nutze, dass gängige fingerprinting-basierte Ortungsalgorithmen (beispielsweise basierend auf WLAN, Bluetooth, WIMAX usw.) für eine sichere Ortung in der Regel lediglich drei bis vier Basisstationen benötigen. Daher können geringfügige Änderungen in der Infrastruktur (beispielsweise das Hinzukommen oder Verschwinden einer Station) mit geringen Genauigkeitseinbußen toleriert werden. Dann ist sowohl die Position bekannt, als auch die Tatsache, dass eine Veränderung beobachtet wurde, so dass die Änderung an der Infrastruktur bzw. an den Umgebungsinformationen mit der bestimmten Position verknüpft und weiter verarbeitet werden kann. Eine derart nachgewiesene Veränderung bzw. eine derart bestimmte Abweichung der Umgebungsinformationen von Referenzumgebungsinformationen, die zeigt, dass für diese Position die ursprünglichen Referenzumgebungsinformationen (Referenzdaten) veraltet sind, kann dazu genutzt werden, um die beobachtete Änderung in Referenzdaten zu integrieren.

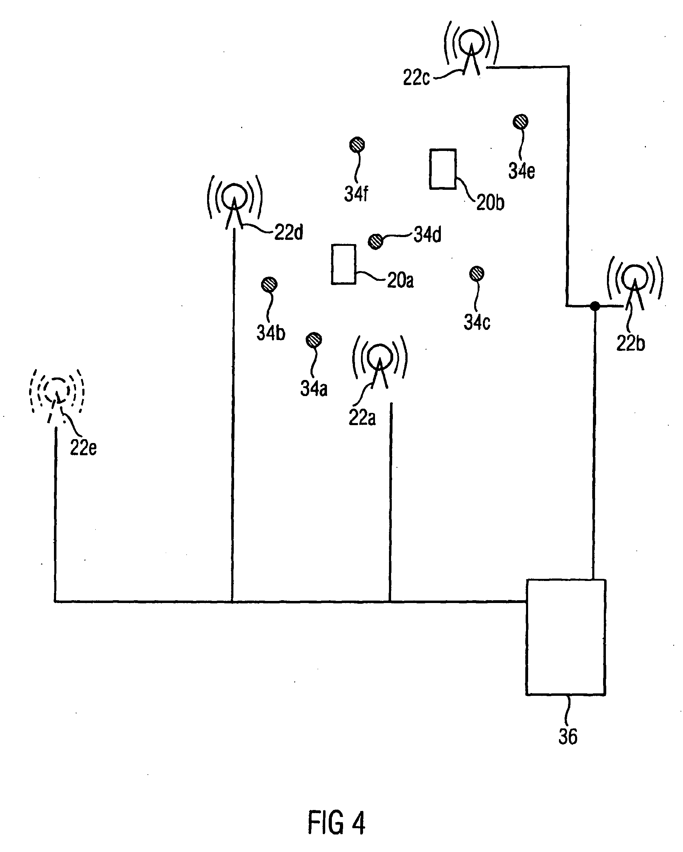

Diese Referenzdaten können beispielsweise an vorbestimmten Referenzpositionen bestimmte Umgebungsinformationen sein. Die Fig. 3 und 4 beschreiben ein Ausführungsbeispiel der vorliegenden Erfindung, bzw. eine Illustration der Anwendung der vorliegenden Erfindung in einer Umgebung mit variierenden Umgebungsinformationen (Fig. 4).

Das Ausführungsbeispiel von Fig. 3 basiert auf dem mobilen Endgerät von Fig. 1 und ist dahingehend erweitert, dass das mobile Endgerät 30 zusätzlich eine Beobachtungseinrichtung 32 aufweist, die sowohl mit der Positionsbestimmungseinrichtung 12, der Empfangseinrichtung 10 und der Referenzdatenverwaltungseinrichtung 14 verbunden ist. Der Beobachtungseinrichtung stehen also die Informationen über die bestimmte Position, die der Positionsbestimmung zugrunde liegenden Umgebungsinformationen und die der Positionsbestimmung zugrunde liegenden Referenzumgebungsinformationen bzw. Referenzdaten zur Verfügung. Für die weitere Diskussion wird dabei davon ausgegangen, dass die Referenzdaten Umgebungsinformationen umfassen, die an vorbestimmten Referenzpositionen 34a - f, die in Fig. 4 gezeigt sind, bestimmt wurden, bzw. diesen Referenzpositionen zugeordnet sind.

Die von der Empfangseinrichtung 10 (beispielsweise einer WLAN-Sende-/Empfangseinheit) erhaltenen Messwerte bzw. Umgebungsinformationen sowie die von der Positionsbestimmungseinrichtung 12 mittels eines Ortungsalgorithmus berechnete Position wird der Beobachtungseinrichtung 32 zugeführt. Die Beobachtungseinrichtung 32 kann die zur errechneten Position verfügbaren Referenzdaten bzw. Referenzumgebungsinformationen mit den Messwerten bzw. den bestimmten Umgebungsinformationen vergleichen und somit Abweichungen feststellen. Solche Abweichungen können beispielsweise zusätzliche oder fehlende Stationen sein, bzw. Änderungen an der Signalcharakteristik einer oder mehrerer Stationen. Die Änderungen können von der Beobachtungseinrichtung 32 in einer einzelnen Beobachtung zusammengefasst oder einzeln weiterverarbeitet werden.

Stellt die Beobachtungseinrichtung 32 eine Abweichung fest, kann diese eine Aktualisierungsmaßnahme ergreifen. Diese Aktualisierungsmaßnahme kann beispielsweise darin bestehen, die Referenzdaten dieses oder anderer mobiler Endgeräte zu aktualisieren. Dabei kann, wenn lediglich die lokale Datenbasis aktualisiert werden soll, die Beobachtungseinrichtung 32 der lokal implementierten Referenzdatenverwaltungseinrichtung 14 Aktualisierungsinformationen senden, welche die Referenzdatenverwaltungseinrichtung 14 dazu verwenden kann, die Referenzdatenbasis zu aktualisieren. Wenn, wie in Fig. 4 angedeutet, als Referenzdaten Umgebungsinformationen für vorbestimmte Referenzpunkte 34a - 34f verwendet werden, ist darüber hinaus ein Referenzdatenmodell nötig, welches aus den diskreten Referenzpositionen Messwerte für andere Positionen bestimmen kann. Im Referenzdatenmodell können dazu die Ausbreitungsbedingungen der Umgebung hinterlegt sein. Wenn, wie in Fig. 4 gezeigt, die mobilen Endgeräte 20a und 20b nicht an den Referenzpositionen befindlich sind, muss das Referenzdatenmodell eine Modellierung der in der Referenzdaten enthaltenen Messgrößen (beispielsweise Received-Signal-Strength-Werte) auf Basis der Erfahrungswerte an den Referenzpositionen für beliebige Zwischenpositionen (die Positionen der mobilen Endgeräte 20a und 20b) ermöglichen. Dies ist nötig, da Beobachtungen an Positionen gemacht werden, die nicht notwendigerweise mit Referenzpositionen übereinstimmen.

Es versteht sich von selbst, dass die Aktualisierung der Referenzdaten auch auf einer externen Referenzdatenverwaltungseinrichtung 36 vorgenommen werden kann, die in Fig. 4 beispielhaft dargestellt ist. Dies kann den Vorteil haben, dass beobachtete Abweichungen mehrerer mobiler Endgeräte 20a und 20b dazu herangezogen werden können, die Referenzdaten zu aktualisieren, was zu einer erhöhten Genauigkeit der Aktualisieren führen kann.

Wie in Fig. 4 gezeigt, sind im Fall einer externen Referenzdatenverwaltungseinrichtung 36 die Aktualisierungsinformationen von den mobilen Endgeräten 20a, 20b an die Referenzdatenverwaltungseinrichtung 36 zu übertragen. Dies kann beispielsweise, wie in Fig. 4 angedeutet, dadurch geschehen, dass die mobilen Endgeräte eine Sende-/Empfangseinheit verwenden, die über die Basisstationen 22a bis 22e in kommunikativem Kontakt mit der Referenzdatenverwaltungseinrichtung 36 stehen, so dass, wenn wie in Fig. 4 gezeigt, die Referenzdatenverwaltungseinrichtung 36 mit den Basisstationen 22a - 22e verbunden ist, die Aktualisierungsinformationen unter Benutzung derselben Technologie, die zur Ortung verwendet wird, an die externe Referenzdatenverwaltungseinrichtung 36 übermittelt werden.

Selbstverständlich ist auch eine andere Technologie der Übermittlung der Aktualisierungsinformationen möglich (beispielsweise DECT, GSM, WIMAX), was den Vorteil haben kann, dass das zur Ortung verwendete Netzwerk von den Aktualisierungsinformationen nicht überlastet wird. So können beispielsweise langsamere Übertragungstechniken für die Aktualisierungsinformationen verwendet werden, was eine hinreichende Datenkonsistenz gewährleistet, da die beobachteten Änderungen, bzw. diejenigen Änderungen, die zur Aktualisierung des Referenzdatenmodells berücksichtigt werden, mit vergleichsweise niedriger Datenrate und Häufigkeit auftreten.

Um die Referenzdaten, bzw. die von den mobilen Endgeräten verwendeten Referenzumgebungsinformationen aktuell und unverfälscht zu halten, müssen die bestimmten Abweichungen der Umgebungsinformationen von den Referenzumgebungsinformationen hinsichtlich ihrer Relevanz und Vertrauenswürdigkeit bewertet werden, bevor diese dazu verwendet werden können, die Referenzdaten zu aktualisieren. Zu diesem Zweck kann die Beobachtungseinrichtung 32 eine Bewertungseinrichtung aufweisen, bzw. die Referenzdatenverwaltungseinrichtung umfasst eine Bewertungseinrichtung, wie sie im Folgenden beschrieben ist.

Damit eine bestimmte Abweichung bzw. eine Beobachtung als relevant erachtet wird, muss zunächst zumindest eine der zwei folgenden Kriterien erfüllt sein: die Beobachtung bzw. die Abweichung muss ein Mindestmaß an Änderung gegenüber dem aktuellen Stand der Referenzdaten enthalten. Darüber hinaus sollte die Beobachtung reproduzierbar sein. Zusätzlich können weitere Kriterien definiert werden, welche die Relevanz der Beobachtung beeinflussen. Ein Beispiel ist der Einfluss auf die Positionsbestimmung bei Kenntnis über die eingesetzte Algorithmik. Beispiele für ein Mindestmaß einer beobachteten Abweichung bzw. einer Änderung sind die Anzahl gesehener, hinzugekommener oder weggefallener Basisstationen sowie die Variation der Empfangsfeldstärke einzelner Stationen. Prinzipiell sind selbstverständlich beliebige Kombinationen obiger Kriterien möglich. Auch kann als erforderliches Mindestmaß eine Funktion hinzugekommener bzw. weggefallener Basisstationen in Abhängigkeit der absolut beobachteten Basisstationsanzahl definiert werden.

Ein Beispiel für das Kriterium der Reproduzierbarkeit kann sein, dass von dem betreffenden mobilen Endgerät dieselbe Beobachtung bzw. dieselbe Abweichung mehrfach beobachtet werden muss, bevor diese zur Aktualisierung der Referenzdaten verwendet wird. Alternativ kann auch bevorzugt werden, dass eine ähnliche Beobachtung bzw. eine ähnliche Abweichung durch mehrere unabhängige Quellen (beispielsweise mehrere unabhängige mobile Endgeräte 20a und 20b) erfolgen muss.

Melden beispielsweise sowohl das mobile Endgerät 20a als auch das mobile Endgerät 20b von Fig. 4 das Verschwinden von Basisstation 22e kann dies als hinreichend reproduzierbar angesehen werden, so dass die Referenzdaten diesbezüglich aktualisiert werden.

Darüber hinaus besteht die Möglichkeit, mit dem Referenzdaten-Modell geographisch benachbarte Beobachtungen in Relation zueinander zu setzen, um auf diese Weise die Relevanz zu bewerten. Eine solche flächendeckende Informationsbasis kann des Weiteren über die ergänzende Modellierung von Bebauung und Geodäsie den Realismusgrad enorm erhöhen.

Die Bewertung der Vertrauenswürdigkeit, bzw. die Forderung, dass ein Vertrauenskriterium erfüllt wird, schafft einen Schutz vor Verfälschung der Referenzdaten durch absichtlich oder unabsichtlich erzeugte falsche Beobachtungen. Dieser Schutz kann beispielsweise durch Einsatz eines Reputationssystems noch verbessert werden. Dabei legt die Reputation eines Beobachters (einer Beobachtungseinheit bzw. eines mobilen Endgeräts 20a oder 20b) dessen Vertrauenswürdigkeit fest. Die Reputation eines Beobachters kann sich dabei beispielsweise aus der Beurteilung dessen früherer Beobachtungen bzw. dessen früherer gesendeter Aktualisierungsinformationen ergeben. Die Bewertung kann dabei direkt durch einen Benutzer (wie beispielsweise bei Reputationssystemen in Online-Versteigerungen, Communities, Hotelbewertungen usw.) vorgenommen werden. In diesem Fall führen die Rückmeldungen von Nutzern, dass die Ortungsgenauigkeit durch das Einbeziehen der Beobachtung des zu bewertenden Beobachters (mobilen Endgeräts) abgenommen hat, zu einer negativen Bewertung und infolge dessen einer schlechteren Reputation des Beobachters bzw. des betreffenden mobilen Endgeräts.

Dabei kann die Bewertung auch automatisiert erfolgen, indem beispielsweise, wie bereits oben angedeutet, die Reproduzierbarkeit einer Beobachtung als Maß für dessen Güte verwendet wird. Dann würde die Reputation eines Beobachters bzw. eines mobilen Endgerätes steigen, wenn er Beobachtungen tätig, die bereits andere Beobachter getätigt haben. Im Umkehrschluss sinkt die Reputation, wenn dessen Beobachtungen von anderen Beobachtern nicht geteilt werden.

Die prinzipielle Gefahr eines automatisierten Reputationssystems, das dieses durch kollektive Falschmeldungen beeinflusst werden kann, kann durch eine Kombination mit einer Bewertung durch reale Nutzer oder Referenzbeobachtungen speziell eingesetzter Personen (-kreise) bzw. spezieller, als vertrauenswürdig eingestufter mobiler Endgeräte, gebannt werden.

Nach der Bewertung der Relevanz und Vertrauenswürdigkeit der Beobachtungen bzw. der bestimmten Abweichungen werden diese zur Aktualisierung der Referenzdaten verwendet. Diese werden von einer Referenzdatenverwaltungseinrichtung vorgenommen, die, wie bereits erwähnt, entweder auf den einzelnen mobilen Endgeräten implementiert oder als externe, zentrale Instanz, die beispielsweise auf einem Server im Internet läuft, ausgeführt sein kann.

Dabei kann die Referenzdatenverwaltungseinrichtung 36 eine Integrationseinheit aufweisen, deren Aufgabe darin besteht, positiv bewertete Beobachtungen bzw. positiv bewertete bestimmte Abweichungen zu verwenden, um die Referenzdaten anzupassen.

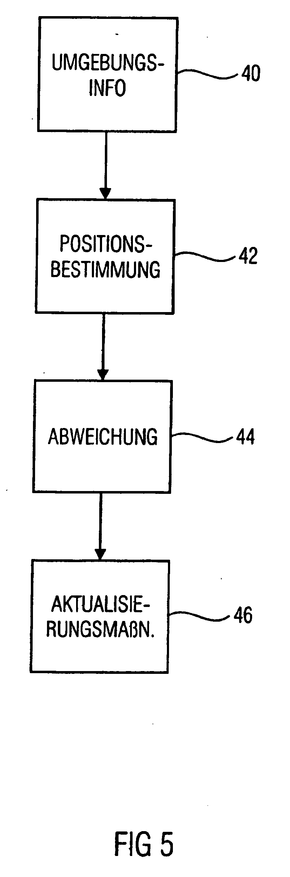

Fig. 5 zeigt ein Blockdiagramm für ein erfindungsgemäßes Ausführurigsbeispiel eines Verfahrens zum Lokalisieren von Endgeräten. In einem Erfassungsschritt 40 werden zunächst Umgebungsinformationen bestimmt. In einem Positionsbestimmungsschritt 42 wird eine Position des Endgeräts basierend auf den Umgebungsinformationen ermittelt. In einem Prüfschritt 44 wird eine Abweichung der Umgebungsinformationen von Referenzumgebungsinformationen, die der Position des Endgeräts zugeordnet sind, bestimmt, so dass in einem Aktualisierungsschritt 46 bei festgestellter Aktualisierung eine Aktualisierungsmaßnahme bei festgestellter Abweichung ergriffen werden kann.

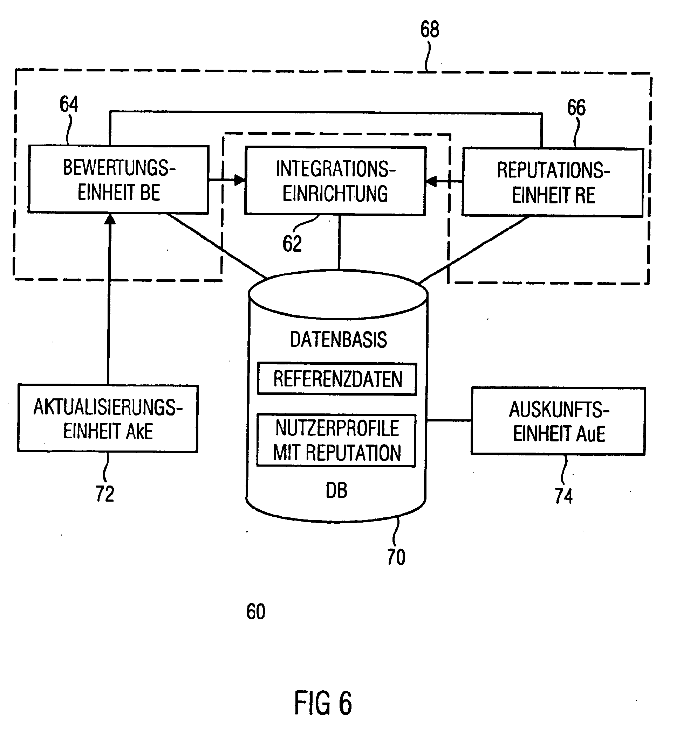

Wenn als Referenzdaten Umgebungsinformationen für vorbestimmte Referenzpositionen verwendet werden, kann eine Aktualisierung der Referenzdaten erfolgen, wie es beispielhaft für einzelne Ausführungsbeispiele in den Fig. 6 - 8 dargestellt ist.

Generell muss dabei zunächst jede Beobachtung bzw. jede bestimmte Abweichung unter Zuhilfenahme des Referenzdatenmodells in Beobachtungen bzw. Umgebungsinformationen an den Referenzpositionen überführt werden. Aus jeder Beobachtung wird dadurch ein Menge an Beobachtungen für Referenzpositionen. Zur Erhöhung der Genauigkeit können für jede Referenzposition die vorliegenden Beobachtungen gesammelt und miteinander und mit den vorliegenden Referenzdaten abgeglichen werden. Aus den Beobachtungen und den bereits hinterlegten Daten können aktualisierte Referenzdaten gebildet werden. Diese können die neuen Referenzdaten für eine spezifische Referenzposition sowie Zusatzinformationen über die Beobachtungen, die zu der Aktualisierung geführt haben, umfassen. Solche Zusatzinformationen können die Beobachtungen in Gänze oder in aggregierter Form umfassen (beispielsweise in Form statistischer Informationen über die Beobachtungen).

Wie bereits erwähnt, können die im Vorhergehenden abstrakt definierten vier Einheiten, die Beobachtungseinheit, die Bewertungseinheit, die Integrationseinheit und das Referenzdatenmodell auf verschiedenen physikalischen Geräten verteilt sein.

Fig. 6 zeigt ein Beispiel einer möglichen Aufteilung dieser Einheiten in Form eines Beispiels für eine Referenzdatenverwaltungseinrichtung 60. Die Referenzdatenverwaltungseinrichtung 60 weist eine Integrationseinrichtung 62, eine Bewertungseinheit 64 und eine Reputationseinheit 66 umfassende Bewertungseinrichtung 68 und eine Datenbasis mit dem Referenzdatenmodell 70 auf.

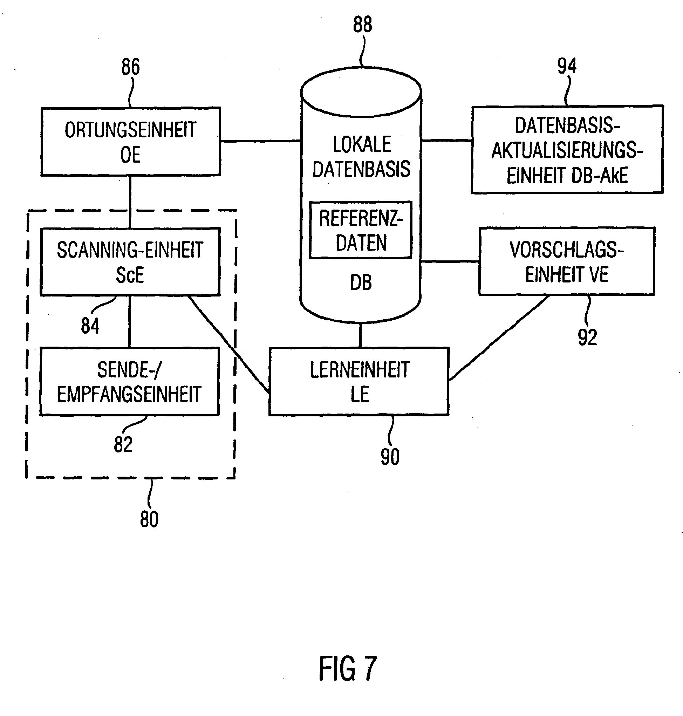

Obige Aufteilung der Komponenten ist, ebenso wie das in Fig. 7 gezeigte Ausführungsbeispiel, lediglich exemplarisch zu verstehen. Prinzipiell sind verschiedene Möglichkeiten der Implementierung des Konzepts denkbar. Im Fall autarker Endgeräte, also eines Szenarios, in dem jedes Endgerät die ihm zur Verfügung gestellten Referenzdaten selbst aktualisiert, befinden sich die Beobachtungseinrichtung, die Bewertungseinrichtung 68, die Integrationseinrichtung 62 und die Datenbasis auf demselben Gerät, dem mobilen Endgerät selbst. Die beschriebenen Schritte bzw. Maßnahmen sind lokal implementiert, ein derartiges Endgerät bzw. mobiles Endgerät aktualisiert seine Referenzdaten nur auf Basis eigener Beobachtungen. Dadurch wird ein Stand-Alone-Betrieb möglich, der keine Konnektivität voraussetzt. Solche Konfigurationen sind beispielsweise für mobile Führungssysteme, wie Stadtführer oder Lotsendienste, vorstellbar.

Des Weiteren ist es möglich, ein Peer-to-Peer-System zu implementieren, bei dem verschiedene Endgeräte von ihren unabhängigen Beobachtungen gegenseitig profitieren können. Bei einem solchen System befinden sich Instanzen der Beobachtungseinrichtung, der Bewertungseinrichtungen, der Integrationseinheit und der Datenbasis auf jedem beteiligten Gerät. Im Gegensatz zum vollständig autarken Endgerät des vorhergehenden Absatzes werden jedoch die lokal erzeugten Beobachtungen bzw. die lokal beobachteten Abweichungen auch an die anderen Geräte mitgeteilt bzw. verteilt. Diejenige Gruppe der weiteren Endgeräte, an die ein Endgerät seine Beobachtungen versendet, kann eingeschränkt sein, beispielsweise geographisch (eventuell nur Geräte in einem gewissen Umkreis oder in Empfangsreichweite). Dadurch kann die Menge der zu übertragenden Informationen (Aktualisierungsinformationen) und die Belastung der Vernetzung verringert werden. Auf jedem Endgerät werden die empfangenen Beobachtungen der weiteren Endgeräte ergänzend in die lokale Bewertungseinrichtung eingespeist.

Bei einem Ausführungsbeispiel wird die Bewertungseinrichtung zweistufig implementiert. In der ersten Stufe werden lokale Beobachtungen zu aktualisierten Referenzdaten mit Zusatzinformationen (Aktualisierungen) aggregiert. In der zweiten Stufe werden diese Daten (von beispielsweise unterschiedlichen Geräten), welche denselben Referenzpunkt bzw. dieselbe Referenzposition betreffen, zusammengeführt. Dabei können die in den Aktualisierungen enthaltenen Zusatzinformationen zur Bewertung und Gewichtung herangezogen werden. Dabei können als Aktualisierungsinformationen entweder die Beobachtungen bzw. die bestimmten Abweichungen der einzelnen Endgeräte direkt oder auch die von dem jeweiligen Endgerät selbst voraus berechneten Aktualisierungen versendet werden. In letzterem Fall kann gegebenenfalls die Menge der zu übertragenden Informationen deutlich verringert werden.

Es versteht sich von selbst, dass beide Möglichkeiten auch kombiniert werden können, d. h., ausgewählte Endgeräte können entweder die Beobachtungen oder die Aktualisierungsinformationen oder beides versenden. Dies kann den Vorteil haben, dass die Anzahl der zu versendenden Informationen beispielsweise von den Ressourcen des betreffenden Endgeräts (Prozessorauslastung, Speicherauslastung etc.) abhängig gemacht werden kann. Darüber hinaus kann auch eine Abhängigkeit von der Anzahl der lokalen Beobachtungen eingeführt werden. So kann, falls lediglich einige wenige Beobachtungen vorliegen, bzw. falls lediglich wenige Abweichungen bestimmt wurden, diese direkt übertragen werden, wohingegen andernfalls die bereits aufbereiteten Aktualisierungsinformationen übertragen werden.

Wie bereits in Fig. 4 angedeutet, kann das erfindungsgemäße Konzept auch in einem Server-Client-System umgesetzt werden. Dabei existiert ein ausgezeichneter Server, bzw. eine externe Referenzdatenverwaltungseinrichtung 36, wie sie in Fig. 4 gezeigt ist. Auf diesem Server ist die Bewertungseinrichtung, die Aktualisierungseinrichtung und eine globale Datenbasis installiert.

Auf den Endgeräten bzw. den mobilen Endgeräten befinden sich die Beobachtungseinrichtungen und lokale Referenzdatenbasen. Die Endgeräte senden ihre Beobachtungen an den Server. Dies kann sofort zum Beobachtungszeitpunkt geschehen oder zu einem definierten Zeitpunkt, also einem Synchronisationszeitpunkt. Somit stehen die Beobachtungen bzw. die bestimmten Abweichungen aller Endgeräte auf dem Server zur Verfügung und werden mittels der Bewertungseinrichtung überprüft. Für vertrauenswürdig befundene Aktualisierungsinformationen bzw. Beobachtungen werden über die Integrationseinrichtung in die Datenbasis eingepflegt und somit zu aktualisierten Referenzdaten verarbeitet. Diese werden vom Server zurück an die beteiligten Endgeräte übertragen und von diesen in die jeweilige lokale Datenbasis bzw. lokale Referenzdatenbank übernommen. Dabei können, um die Netzbelastung gering zu halten, differenzielle Informationen hinsichtlich der Referenzdaten übertragen werden. Selbstverständlich ist es alternativ auch möglich, die vollständigen Datensätze zu übertragen, wenn der Kommunikations- und Integrationsaufwand dies erlauben.

Ein wie oben beschriebenes Server-Client-Szenario kann den Vorteil aufweisen, dass auf den beteiligten Endgeräten ein niedrigerer Ressourcenbedarf besteht. Darüber hinaus können die Daten eine höhere Genauigkeit aufweisen, da die Beobachtungen von mehreren Endgeräten in die Aktualisierung der Referenzdaten eingehen, der Server also eine globale Kenntnis über die Umgebungsinformationen bzw. die Empfangssituationen der beteiligten Endgeräte besitzt.

Anhand der Fig. 6 und 7 ist im Folgenden ein Ausführungsbeispiel einer Server-Client-Implementierung dargstellt, bei dem keine permanente Verbindung bestehen muss.

Wie bereits beschrieben, weist der in Fig. 6 gezeigte Server eine Datenbasis 70 auf, welche die Referenzdaten und Nutzerprofile mit Reputationen bzw. Zuverlässigkeitsbewertungen für einzelne Nutzer bzw. Endgeräte enthält. Eine Aktualisierungseinheit 72 erhält Aktualisierungsinformationen von den Clients bzw. den Endgeräten.

Die Bewertungseinrichtung 68 umfasst die Bewertungseinheit 64 und die Reputationseinheit 66. Die Bewertungseinrichtung 68 bewertet die Aktualisierungsvorschläge bzw. die Aktualisierungsinformationen unter Zuhilfenahme der Reputation des Nutzers und durch Abgleich der Aktualisierungsinformationen mit weiteren Aktualisierungsinformationen weiterer Beobachter. Zusätzlich kann die Bewertungseinrichtung Informationen der bestehenden Referenzdatenbasis verwenden, um die Relevanz bzw. die Vertrauenswürdigkeit der Aktualisierungsinformationen der betreffenden Endgeräte zu bewerten.

Die Integrationseinrichtung 62 dient dazu, bewertete Aktualisierungsvorschläge bzw. Aktualisierungsinformationen in die zentrale Datenbasis 70 einzuarbeiten. Die Reputationseinheit 66 wertet als Teil der Bewertungseinrichtung 68 die Nutzerprofile für die Bewertungseinheit aus und aktualisiert aufgrund deren Rückmeldung wiederum die Reputations- bzw. Nutzerprofile in der Datenbasis 70. Optional kann eine Auskunftseinheit 74 vorgesehen sein, die den Clients oder Engeräten auf Anfrage Referenzdaten, z. B. für ein geographisches Gebiet mitteilt.

Ein Beispiel für einen Client bzw. ein Endgerät, welches mit dem in Fig. 6 gezeigten Server bzw. der in Fig. 6 gezeigten Referenzdatenverwaltungseinrichtung kommuniziert, ist in Fig. 7 dargestellt. Dieses kann eine Empfangseinrichtung 80 aufweisen, die beispielsweise aus einer Sende-/Empfangseinheit 82 und einer Scanning-Einheit 84 besteht. Das in Fig. 7 gezeigte Beispiel eines Endgeräts weist ferner eine Positionsbestimmungseinrichtung 86 (Ortungseinheit), sowie eine lokale Datenbasis 88 auf. Die Empfangseinrichtung 80 kann bei einem Beispiel lediglich dem Empfang von Informationen bzw. der Bestimmung von Umgebungsinformationen dienen. Bei einem weiteren Ausführungsbeispiel kann diese auch zum Senden von Daten bzw. von Aktualisierungsinformationen verwendet werden.

Die Scanning-Einheit 84 dient zum Ermitteln einer Liste von den Basisstationen in der Umgebung, die empfangbar sind. Die Scanning-Einheit liefert also Listen mit einer Zuordnung zwischen der Basisstationskennung und der aktuell empfangenen Feldstarke/Signalqualität. Beim Beispiel von WLAN-Systemen kann die Basisstation über ihre MAC-Adresse identifiziert werden. Alternativ kann die Basisstationskennung BSSID verwendet werden, wenn sie ein Gerät eindeutig identifiziert. Darüber hinaus ist jedwede andere eindeutige Zuordnungsmöglichkeit implementierbar.

Die Positionsbestimmungseinrichtung 86 bzw. die Ortungseinheit dient dazu, die aktuelle Position aus den Referenzdaten sowie aus den von der Empfangseinrichtung 80 bestimmten Umgebungsinformationen zu ermitteln.

Das Endgerät umfasst ferner eine Lerneinheit 90, die die aktuellen Umgebungsinformationen, d. h. also die Scanning-Daten mit den Referenzdaten der lokalen Datenbasis 88 abgleicht und aus einer eventuell bestimmten Abweichung Aktualisierungsvorschläge bzw. Aktualisierungsinformationen ableitet. Ein Beispiel für das Erzeugen von Aktualisierungsinformationen kann dabei beispielsweise die Entdeckung von einer unbekannten Basisstation oder das Verschwinden einer in den Referenzdaten verzeichnete Station sein. Die Lerneinheit kann dabei unter Anderem auch Plausibilitätskriterien, wie Laufwege und -zeiten von Nutzern (Bewegungsprofile) und explizite Benutzereingaben (beispielsweise die Angabe einer Korrekturposition) heranziehen. Die Aktualisierungsvorschläge werden an eine Vorschlagseinheit 92 übermittelt, die eine Verbindung zum Server herstellen oder entgegennehmen kann, um dort die Aktualisierungsvorschläge bzw. die Aktualisierungsinformationen zu hinterlegen. Die Vorschlagseinheit 92 dient also dem Ergreifen einer Aktualisierungsmaßnahme, wenn von der Lerneinheit 90 eine Abweichung der Umgebungsinformationen von aus den Referenzdaten abgeleiteten Referenzinformationen beobachtet wird.

Eine Aktualisierungseinrichtung 94 ist mit der lokalen Datenbasis 88 verbunden und dient dazu, vom Server bzw. von der Referenzdatenverwaltungseinrichtung übermittelte aktualisierte Referenzdaten in die lokale Datenbasis einzuarbeiten.

Prinzipiell kann ein auf einem mobilen Endgerät von Fig. 7 und einer Referenzdatenverwaltungseinrichtung von Fig. 6 basierendes System nach dem Received-Signal-Strength-Fingerprinting-Verfahren arbeiten. Dies bedeutet, dass durch Testmessungen die Signalstärke an hinreichend vielen Punkten experimentell ermittelt wird. Dadurch entsteht eine Referenz-Datenbasis, die zu jeder Position, an der eine Testmessung durchgeführt wurde, eine Liste von Basisstationen (Access Points) mit der jeweilig zugeordneten Empfangsfeldstärke und -qualität enthält. Bei einer WLAN-Implementierung des erfindungsgemäßen Konzepts kann eine solche Referenzdaten-Basis beispielsweise die folgenden Parameter enthalten:

| RID | MAC | RSSI | PGS | X | Y | Z | MAPNR | CREATED |
|---|---|---|---|---|---|---|---|---|
| 1 | 00.0D.54.9E.17.81 | 46530 | 100 | 5795 | 15627 | 150 | 0 | 12.03.07 12:42 |
| 1 | 00.0D.54.9E.1A.BA | 67260 | 90 | 5795 | 15627 | 150 | 0 | 12.03.07 12:42 |
| 1 | 00.0D.54.9E.1D.64 | 72002 | 88 | 5795 | 15627 | 150 | 0 | 12.03.07 12:42 |
| 1 | 00.0E.6A.D3.B9.8B | 59531 | 100 | 5795 | 15627 | 150 | 0 | 12.03.07 12:42 |
| 1 | 00.0F.A3.10.07.6C | 46464 | 96 | 5795 | 15627 | 150 | 0 | 12.03.07 12:42 |
| 1 | 00.0F.A3.10.07.FB | 74488 | 94 | 5795 | 15627 | 150 | 0 | 12.03.07 12:42 |
| 1 | 00.0F.A3.10.09.SF | 72375 | 97 | 5795 | 15627 | 150 | 0 | 12.03.07 12:42 |
| 2 | 00.0D.54.9E.17.81 | 54138 | 100 | 19399 | 15451 | 150 | 0 | 12.03.07 12:443 |
| 2 | 00.0D.54.9E.18.1D | 76560 | 11 | 14399 | 15451 | 150 | 0 | 12.03.07 12:43 |
| 2 | 00.0D.54.9E.1A.BA | 62318 | 94 | 14399 | 15451 | 150 | 0 | 12.03.07 12:43 |
| 2 | 00.0D.54.9E.1D.64 | 71348 | 96 | 14399 | 15451 | 150 | 0 | 12.03.07 12:43 |
| 2 | 00.0E.6A.D3.B9.8B | 45393 | 100 | 14399 | 15451 | 150 | 0 | 12.03.07 12:43 |
| 2 | 00.0F.A3.10.07.6C | 66853 | 96 | 14399 | 15451 | 150 | 0 | 12.03.07 12:43 |
| 2 | 00.0F.A3.10.07.FB | 72251 | 100 | 14399 | 15451 | 150 | 0 | 12.03.07 12:93 |
| 2 | 00.0F.A3.10.09.5F | 70990 | 90 | 14399 | 15451 | 150 | 0 | 12.03.07 12:43 |
| 3 | 00.0D.54.9E.17.81 | 58291 | 100 | 24583 | 15627 | 150 | 0 | 12.03.07 12:93 |
| 3 | 00.0D.54.9E.18.1D | 78610 | 68 | 24583 | 15627 | 150 | 0 | 12.03.07 12:43 |
| 3 | 00.0D.54.9E.1A.BA | 62153 | 98 | 24583 | 15627 | 150 | 0 | 12.03.07 12:43 |
| 3 | 00.0D.54.9E.1D.64 | 64187 | 90 | 24583 | 15627 | 150 | 0 | 12.03.07 12:43 |
| 3 | 00.0E.6A.D3.B9.8B | 32851 | 100 | 24583 | 15627 | 150 | 0 | 12.03.07 12:43 |
| 3 | 00.0F.A3.10.07.6C | 69006 | 96 | 24583 | 15627 | 150 | 0 | 12.03.07 12:43 |
| 3 | 00.0F.A3.14.07.FB | 71749 | 92 | 24583 | 15627 | 150 | 0 | 12.03.07 12:43 |
| 3 | 00.0F.A3.10.09.5F | 71482 | 83 | 24583 | 15627 | 150 | 0 | 12.03.07 12:43 |
| 3 | 00.0F.A3.10.09.80 | 71000 | 40 | 24583 | 15627 | 150 | 0 | 12.03.07 12:43 |

Dabei enthält die Tabelle die folgenden Informationen:
   - die Referenzpunkt-Identifikation (RID)
   - die MAC-Adressen der empfangenen Stationen
   - die Empfangsfeldstärken der Access Points (RSSI; 46560 bedeutet -46,560 dBm)
   - die Position in kartesischen, metrischen Koordinaten (x, y, z; 24583 bedeutet 245,83 m) sowie
   - der Zeitpunkt der Messwertaufnahme.

Die Spalte PGS ("Percentage Seen") gibt an, wie häufig diese Station bei der Messwertaufnahme prozentual gesehen wurde (d. h. PGS = 90 bedeutet, dass im Schnitt die Station bei 9 von 10 Messungen gemessen wurde). Für die Lokalisierung werden aktuell aufgenommene Messwerte mit der Datenbasis verglichen. Der ähnlichste oder eine Integration der ähnlichsten Referenzpunkte werden als aktuelle Position angenommen. Für den Abgleich sind mehrere Verfahren denkbar; das am weitesten verbreitete ist Least-Distance-in-Signal-Space.

Das Least-Distance-in-Signal-Space-Verfahren ist für eine statische, d. h. für eine sich nicht ändernde Umgebung entwickelt worden. Daher führen Änderungen an der Infrastruktur, insbesondere das Hinzukommen und das Verschwinden von Access Points zu Positionierungsfehlern. Daher wurde dieses Verfahren für den Einsatz in dynamischen Umgebungen und für die Anwendung im Rahmen der erfindungsgemäßen Lehre verbessert. Um eine dynamische Umgebung mit einer Datenbasis abbilden zu können, wurden weitere Felder in die Datenbasis integriert. Ein Beispiel für eine solche Erweiterung ist eine Datenbasis, die für jeden Referenzpunkt sowohl die Position des Punktes als auch eine Liste aller an diesem Punkt empfangbaren Basisstationen (bzw. deren MAC-Adressen) aufweist.

Für jede einzelne Basisstation ist darüber hinaus folgende Information hinterlegt: die zugehörige Empfangsfeldstärke (Mittel, Varianz), der oben beschriebene PGS-Wert, der Zeitpunkt, wann die Station zum letzten Mal von einem Endgerät empfangen wurde (Datum, Uhrzeit), ein zeitliches Profil, z. B. eine Wochenzeittafel, in der vermerkt ist, an welchen Wochentagen und Tageszeiten die Station gesichtet wurde. Wie bereits erwähnt, existiert, um Änderungsvorschläge bzw. von Endgeräten beobachtete Abweichungen von Referenzumgebungsinformationen zu Umgebungsinformationen besser bewerten zu können und böswillige Nutzer aus dem System ausschließen zu können, ein Reputationssystem. Dabei wird für jeden Nutzer ein Nutzerprofil angelegt, welches in der Referenzdatenbasis auf dem Server bzw. auf der Referenzdatenverwaltungseinrichtung abgelegt ist. Entscheidet die Bewertungseinrichtung 68 des Servers, dass der Vorschlag eines Nutzers in einer Änderung in der Datenbasis resultiert, so steigt die Reputation dieses Nutzers. Vorschläge, die den Vorschlägen anderer Nutzer widersprechen, oder unplausibel sind, senken die Reputation des vorschlagenden Nutzers.

Die globale Datenbasis 88 (Referenzdaten und Nutzerprofile), wird zentral auf dem Server verwaltet. Die mobilen Endgeräte können Teile der Referenz-Datenbasis vom Server erhalten bzw. herunterladen und als lokale Datenbasis 70 verwenden.

Der Ortungsalgorithmus der Positionsbestimmungseinrichtung 86 des Clients bzw. des Endgerätes verwendet bei einem Ausführungsbeispiel das Fingerprinting-Verfahren. Das Verfahren zum Abgleich zwischen lokaler Datenbasis und den aktuellen Messwerten wird durch ein fehlertoleranteres ersetzt. Die Fehlertoleranz äußert sich unter Anderem dadurch, dass hinzugekommene Stationen ebenso wie verschwundene Stationen toleriert werden und darüber hinaus diese neuen Informationen in der globalen Datenbasis 70 berücksichtigt werden. In einem weiteren Ausführungsbeispiel besteht zudem die Möglichkeit, den Benutzer zwischen zwei oder mehreren möglichen Positionen oder einer manuellen Präzisierung wählen zu lassen und diese Information zum ergänzenden Nachlernen der aktuellen Position zu verwenden.

Die Positionsbestimmungseinrichtung 86 liefert als Position eventuell nicht nur Referenzpositionen der Referenzdaten, sondern schätzt zusätzlich einen realistischen Bewegungsverlauf zwischen den Referenzpunkten ab. Zum Bestimmen der Parameter des Bewegungsmodells können unterschiedliche Fit-Algorithmen verwendet werden, beispielsweise kann ein Kalman-Filter verwendet werden. Bei einem Ausführungsbeispiel gleicht die Lerneinheit 90 auf dem Client bzw. dem Endgerät die aktuellen Messwerte der Sende-/Empfangseinheit 82 über die Scanning-Einheit 84, die errechnete Position der Positionsbestimmungseinrichtung 86 und die lokale Datenbasis 88 zueinander ab. Dadurch können Änderungen in der Infrastruktur gegenüber der der Datenbasis zugrunde liegenden Infrastruktur erkannt werden. Aus diesen erkannten Änderungen bzw. den derart bestimmten Abweichungen generiert der Client einen Änderungsvorschlag in Form von Aktualisierungsinformationen. Der Änderungsvorschlag kann dabei folgende Informationen enthalten:
- die aktuelle Position mit Fehlerschätzung/Zuverlässigkeitsinformation
- eine Liste der aktuell detektierten Stationen mit deren zugehörigen Feldstärkewerten und Qualität
- einen Zeitstempel (Datum und Uhrzeit).

Bei einem weiteren Ausführungsbeispiel erzeugt der Client selbst dann Änderungsvorschläge bzw. Aktualisierungsinformationen, wenn keine oder nur geringe Änderungen nachgewiesen werden können. Solche finderungsinformationen können auf dem Server dazu verwendet werden, die Wochenzeittafeln mit der zeitlichen Sichtbarkeit der Stationen zu vervollständigen bzw. zu aktualisieren.

Auf dem Server befindet sich eine globale Datenbasis 70. Der Server kann bei einem weiteren Ausführungsbeispiel über das Internet erreichbar sein und enthält darüber hinaus eine Bewertungseinrichtung, die neue, einzubringende Änderungen vor der Integration auf Relevanz, Plausibilität und Vertrauenswürdigkeit überprüft wird.

In einem weiteren Ausführungsbeispiel wird in der Bewertungseinrichtung folgender Algorithmus abgearbeitet:
In der Referenzdaten-Bewertungseinheit laufen folgende Vorgänge ab:
   1. Sammlung aller eingehenden Änderungsvorschläge
   2. Gruppierung der Vorschläge nach geographischen Positionen (Auffinden von mehreren Vorschlägen zu einer Position)
      Für jede Vorschlagsgruppe:
   3. Gewichtung der Einzelvorschläge mit der jeweiligen Reputation des vorschlagenden Nutzers
   4. Vergleich der Einzelvorschläge unter Berücksichtigung zeitlicher Aspekte(Wochentag, Uhrzeit), Ableitung eines Gesamtvorschlags
   5. Abgleich des Gesamtvorschlags mit den Referenzdaten in der Datenbasis Übergabe des Gesamtvorschlags und an die Integrationseinheit
   6. Übergabe der Einzelvorschläge an die Datenbasis zur Aktualisierung deren statistischer Felder
   7. Aufwertung der Reputation der Nutzer, deren Vorschlag sich mit dem Gesamtvorschlag deckt
   8. Abwertung der Reputation der Nutzer, deren Vorschlag dem Gesamtvorschlag widerspricht

Bei einem weiteren Ausführungsbeispiel wird auf dem Endgerät zusätzlich eine Vorrichtung eingesetzt, die Bewegungen des Endgerätes selbst detektieren und in die Positionsbestimmung einbeziehen kann. Dadurch kann die Genauigkeit des Gesamtsystems erhöht werden. Ein Beispiel für einen solchen Bewegungsdetektionssensor sind Trägheitssensoren.

Ein weiteres Ausführungsbeispiel umfasst die Generierung, Speicherung und Einbeziehung von gerätespezifischen Informationen (Geräteprofilen) zur Bewertung von Erfahrungen und zur Verbesserung von Ortsschätzungen.

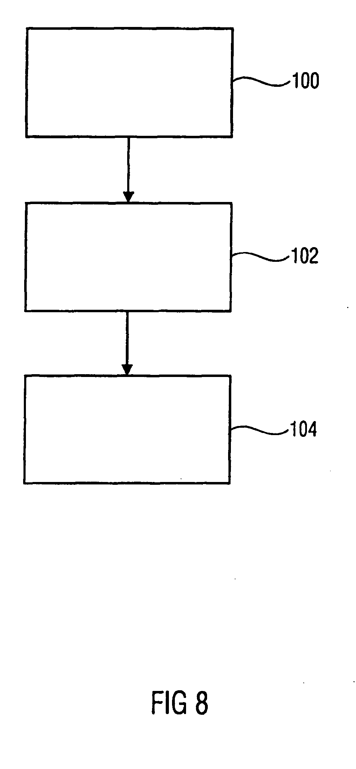

Ein Ausführungsbeispiel für ein Verfahren zum Verwalten von Referenzumgebungsinformationen eines Endgerätes ist anhand eines Blockdiagramms in Fig. 8 dargestellt. Dabei sind die wesentlichen Schritte ein Empfangsschritt 100 in dem Aktualisierungsinformationen einer Umgebung eines Endgerätes erhalten werden. In einem Bewertungsschritt 102 wird eine Zuverlässigkeit der Aktualisierungsinformationen bewertet.

In einem Aktualisierungsschritt 104 werden die Referenzumgebungsinformationen der Umgebung des Endgerätes geändert bzw. aktualisiert, wenn beim Bewerten der Zuverlässigkeit ein Zuverlässigkeitskriterium erfüllt wurde.

Die erfindungsgemäßen Verfahren zum Lokalisieren von Endgeräten bzw. zum Verwalten von Referenzumgebungsinformationen einer Umgebung eines Endgerätes sind flexibel einsetzbar. Beispielsweise können mehrere Personaldigitalassistenten (PDAs) oder Smartphones, die mit WLAN-Sende-/Empfangseinheiten ausgestattet sind, zum Durchführen von Messungen verwenden werden. Dadurch lassen sich die (eindeutigen) MAC-Adressen der Basisstationen im innerstädtischen Bereich und die dazugehörigen Empfangsfeldstärken ermitteln. Die oben beschriebenen Module bzw. Komponenten können mittels Software realisiert sein, die einer Anwendung oder einer Visualisierungsoberfläche die ermittelten Positionsdaten zur Verfügung stellen kann.

Im innerstädtischen Bereich stehen punktuell öffentliche WLAN-Zugangspunkte (Hotspots bzw. Access Points) zur Verfügung. Diese haben typischerweise eine Verbindung zum Internet und damit zu einem Server, der das Verfahren zum Verwalten von Referenzumgebungsinformationen implementiert. Dieser Server beinhaltet einige oder alle Komponenten, die weiter oben beschrieben wurden. Diese Konnektivität wird zur Datenübertragung und zwecks Aktualisierungsendabgleich verwendet.

Mit einem solchen System kann z. B. ein Führungs- oder Informationssystem realisiert werden, welches im innerstädtischen Bereich verfügbar ist und dort eine hohe Positionsbestimmungsgenauigkeit ermöglicht.

Wie bereits erwähnt, ist das erfindungsgemäße Konzept auch auf eine Peer-to-Peer-Infrastruktur übertragbar oder kann auf autarken Endgeräten angewendet werden, auch wenn die Mehrzahl der detaillierten Ausführungen im Zusammenhang mit einem Client-Server-basierten System erfolgt sind.

Die Endgeräte, in denen das erfindungsgemäße Verfahren ablaufen kann, sind nicht auf die bereits erwähnten PDAs und Mobiltelefone beschränkt. Vielmehr kommen sämtliche anderen, mit Sende- und Empfangseinrichtungen, ausgestatteten Endgeräte in Betracht. Dies können beispielsweise Digitalkameras, Autoradios oder andere in Kfz's oder Motorräder eingebaute Komponenten oder dergleichen sein.

Abhängig von den Gegebenheiten kann das Verfahren zur Lokalisierung von Endgeräten in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das erfindungsgemäße Verfahren zur Lokalisierung von Endgeräten ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Verfahren zum Verwalten von Referenzumgebungsinformationen einer Umgebung eines Endgerätes (20a, 20b; 30), mit folgenden Schritten:
Erhalten (100) von Aktualisierungsinformationen der Umgebung des Endgeräts von dem Endgerät;
Bewerten (102) einer Zuverlässigkeit der Aktualisierungsinformationen;
Ändern (104) der Referenzumgebungsinformationen der Umgebung des Endgeräts (20a, 20b; 30), wenn beim Bewerten der Zuverlässigkeit ein Zuverlässigkeitskriterium erfüllt wird,
**dadurch gekennzeichnet, dass** das Bewerten der Zuverlässigkeit der Aktualisierungsinformationen eine Auswertung eines Vertrauenswerts des die Aktualisierungsinformationen sendenden Endgeräts umfasst.

2. Verfahren gemäß Anspruch 1, bei dem das Zuverlässigkeitskriterium erfüllt ist, wenn eine der erhaltenen Aktualisierungsinformation äquivalente weitere Aktualisierungsinformation erhalten wird.

3. Verfahren gemäß Anspruch 1, bei dem das Zuverlässigkeitskriterium erfüllt ist, wenn eine der erhaltenen Aktualisierungsinformation äquivalente weitere Aktualisierungsinformationen von einem weiteren Endgerät erhalten wird.

4. Verfahren gemäß einem der Patentansprüche 1 bis 3, bei dem das Ändern der Referenzumgebungsinformationen ein Aktualisieren von Referenzdaten umfasst, welche Umgebungsinformationen für vorbestimmte Referenzpositionen in der Umgebung des Endgeräts umfassen.

5. Verfahren gemäß Anspruch 4, bei dem das Aktualisieren von Referenzdaten das Ändern der Umgebungsinformationen der Referenzpositionen unter Verwendung eines Referenzdaten-Modells umfasst, so dass an einer Position des Endgeräts (20a, 20b; 30) Referenzumgebungsinformation, die unter Verwendung der geänderten Referenzdaten bestimmt werden, den vom Endgerät beobachteten Umgebungsinformationen innerhalb eines Toleranzbereichs entsprechen.

6. Verfahren gemäß Anspruch 4 oder 5, das ferner folgenden Schritt aufweist:
Übermitteln von aktualisierten Referenzdaten an das Endgerät (20a, 20b; 30).

7. Verfahren gemäß Anspruch 1, bei dem ein Vertrauenswert eine hohe Vertrauenswürdigkeit signalisiert, wenn Aktualisierungsinformationen des Endgeräts in der Vergangenheit zutreffend waren.

8. Verfahren gemäß einem der Ansprüche 1 oder 2, bei dem der Vertrauenswert eine hohe Vertrauenswürdigkeit signalisiert, wenn eine Genauigkeit der Positionsbestimmung des Endgeräts bei Berücksichtigung der Aktualisierungsinformationen verbessert wird.

9. Computerprogramm mit einem Programmcode zur Durchführung des Verfahrens nach einem der Ansprüche 1 bis 8, wenn das Programm auf einem Computer abläuft.

10. Referenzdatenverwaltungseinrichtung (60) zum Verwalten von Referenzinformation in der Umgebung eines Endgeräts (20a, 20b; 30), mit folgenden Merkmalen:
einer Aktualisierungseinrichtung (72) zum Erhalten von Aktualisierungsinformationen der Umgebung des Endgeräts von dem Endgerät;
einer Bewertungseinrichtung (68) zum Bewerten einer Zuverlässigkeit der Aktualisierungsinformationen; und
einer Integrationseinrichtung (62) zum Ändern der Referenzumgebungsinformationen der Umgebung des Endgerätes, wenn bei der Bewertung der Zuverlässigkeit von der Bewertungseinrichtung das Erfüllen eines Zuverlässigkeitskriteriums festgestellt wird,
**dadurch gekennzeichnet, dass** das Bewerten der Zuverlässigkeit der Aktualisierungsinformationen eine Auswertung eines Vertrauenswerts des die Aktualisierungsinformationen sendenden Endgeräts umfasst.

11. Lokalisierungssystem zum Lokalisieren von Endgeräten, mit folgenden Merkmalen:
einer Lokalisierungseinrichtung zum Lokalisieren eines Endgeräts mit folgenden Merkmalen:
einer Umgebungsinformationserfassungseinrichtung (10) zum Erfassen von Umgebungsinformationen;
einer Positionsbestimmungseinrichtung (12) zum Bestimmen einer Position des Endgeräts (20a, 20b; 30), basierend auf den Umgebungsinformationen; und
einer Beobachtungseinrichtung (32) zum Bestimmen einer Abweichung der Umgebungsinformationen von Referenzumgebungsinformationen, die der Position des Endgeräts zugeordnet sind und zum Ergreifen einer Aktualisierungsmaßnahme, bei festgestellter Abweichung;
und
einer Referenzdatenverwaltungseinrichtung gemäß Anspruch 10.

## Claims

1. Method for managing reference ambient information of surroundings of a terminal device (20a, 20b; 30), comprising the following steps:
receiving (100) update information of the surroundings of the terminal device by the terminal device;
assessing (102) a reliability of the update information;
changing (104) the reference ambient information of the surroundings of the terminal device (20a, 20b; 30) when a reliability criterion is fulfilled when assessing the reliability,
**characterized in that** assessing the reliability of the update information includes an assessment of a value of trust of the terminal device sending the update information.

2. Method according to claim 1, wherein the reliability criterion is fulfilled when further update information equivalent to the obtained update information is obtained.

3. Method according to claim 1, wherein the reliability criterion is fulfilled when further update information equivalent to the obtained update information is obtained by a further terminal device.

4. Method according to one of claims 1 to 3, wherein changing the reference ambient information includes updating reference data including ambient information for predetermined reference positions in the surroundings of the terminal device.

5. Method according to claim 4, wherein updating reference data includes changing the ambient information of the reference positions using a reference data model, so that at a position of the terminal device (20a, 20b; 30) reference ambient information determined using the changed reference data corresponds to the ambient information observed by the terminal device within a tolerance range.

6. Method according to claim 4 or 5, further comprising:
transferring updated reference data to the terminal device (20a, 20b; 30).

7. Method according to claim 1, wherein a value of trust signalizes a high trustworthiness when update information of the terminal device were correct in the past.

8. Method according to one of claims 1 or 2, wherein the value of trust signalizes a high trustworthiness when an accuracy of the position determination of the terminal device is improved when considering the update information.

9. Computer program having a program code for executing the method according to any of claims 1 to 8, when the program runs on a computer.

10. Reference data management means (60) for managing reference information in the surroundings of a terminal device (20a, 20b; 30), comprising:
an update means (72) for receiving update information of the surroundings of the terminal device by the terminal device;
an assessment means (68) for assessing a reliability of the update information; and
an integration means (62) for changing the reference ambient information of the surroundings of the terminal device when it is determined by the assessment means that a reliability criterion is fulfilled when assessing the reliability,
**characterized in that** assessing the reliability of the update information includes an assessment of a value of trust of the terminal device sending the update information.

11. Localization system for localizing terminal devices, comprising:
a localization means for localizing a terminal device, comprising:
an ambient information detection means (10) for detecting ambient information;
a position determination means (12) for determining a position of the terminal device (20a, 20b; 30) based on the ambient information; and
an observation means (32) for determining a deviation of the ambient information from reference ambient information allocated with the position of the terminal device and for undertaking an updating measure when a deviation is determined; and
a reference data management means according to claim 10.

## Revendications

1. Procédé pour gérer des informations de référence d'un environnement d'un terminal (20a, 20b; 30), aux étapes suivantes consistant à:
obtenir (100) du terminal des informations de mise à jour de l'environnement du terminal;
évaluer (102) une fiabilité des informations de mise à jour;
modifier (104) les informations de référence de l'environnement du terminal (20a, 20b; 30) lorsque, lors de l'évaluation de la fiabilité, un critère de fiabilité est rempli,
**caractérisé par le fait que** l'évaluation de la fiabilité des informations de mise à jour comprend une évaluation d'une valeur de fiabilité du terminal envoyant les informations de mise à jour.

2. Procédé selon la revendication 1, dans lequel le critère de fiabilité est rempli lorsqu'il est obtenu une autre information de mise à jour équivalente à l'information de mise à jour reçue.

3. Procédé selon la revendication 1, dans lequel le critère de fiabilité est rempli lorsqu'il est obtenu d'un autre terminal une autre information de mise à jour équivalente à l'information de mise à jour reçue.

4. Procédé selon l'une des revendications 1 à 3, dans lequel la modification des informations de référence d'environnement comporte une mise à jour de données de référence qui comportent des informations d'environnement pour des positions de référence prédéterminées dans l'environnement du terminal.

5. Procédé selon la revendication 4, dans lequel la mise à jour de données de référence comporte la modification des informations d'environnement des positions de référence à l'aide d'un modèle de données de référence, de sorte qu'en une position du terminal (20a, 20b; 30) les informations de référence d'environnement qui sont déterminées à l'aide des données de référence modifiées correspondent, dans les limites d'une plage de tolérances, aux informations d'environnement observées par le terminal.

6. Procédé selon la revendication 4 ou 5, présentant par ailleurs l'étape suivante consistant à:
transmettre les données de référence mises à jour au terminal (20a, 20b; 30).

7. Procédé selon la revendication 1, dans lequel une valeur de confiance signale une haute assurance lorsque les informations de mise à jour du terminal étaient pertinentes par le passé.

8. Procédé selon l'une des revendications 1 ou 2, dans lequel la valeur de confiance signale une haute assurance lorsqu'une précision de la détermination de position du terminal est améliorée en tenant compte des informations de mise à jour.

9. Programme d'ordinateur avec un code de programme pour réaliser le procédé selon l'une des revendications 1 à 8 lorsque le programme est exécuté sur un ordinateur.

10. Dispositif de gestion de données de référence (60) pour gérer des informations de référence dans l'environnement d'un terminal (20a, 20b; 30), aux caractéristiques suivantes:
un moyen de mise à jour (72) destiné à obtenir du terminal des informations de mise à jour de l'environnement du terminal;
un moyen d'évaluation (68) destiné à évaluer une fiabilité des informations de mise à jour; et
un moyen d'intégration (62) destiné à modifier les informations de référence de l'environnement du terminal lorsqu'il est constaté, lors de l'évaluation de la fiabilité par le moyen d'évaluation, qu'un critère de fiabilité est rempli,
**caractérisé par le fait que** l'évaluation de la fiabilité des informations de mise à jour comporte une évaluation d'une valeur de confiance du terminal envoyant les informations de mise à jour.

11. Système de localisation destiné à localiser des terminaux, aux caractéristiques suivantes:
un moyen de localisation destiné à localiser un terminal, aux caractéristiques suivantes:
un moyen de saisie d'informations d'environnement (10) destiné à saisir des informations d'environnement;
un moyen de détermination de position (12) destiné à déterminer une position du terminal (20a, 20b; 30), sur base des informations d'environnement; et
un moyen d'observation (32) destiné à déterminer un écart des informations d'environnement par rapport aux informations de référence d'environnement associées à la position du terminal et à prendre une mesure de mise à jour en cas d'écart constaté; et
un moyen de gestion de données de référence selon la revendication 10.
